# EUROPEAN PATENT APPLICATION

(11) **EP 1 148 506 A1**
(43) Date of publication of application: **24.10.2001**
(21) Application number: 01303495.4
(22) Date of filing: 17.04.2001
(51) Int. Cl.: G11B 33/04

(54) **Housing for disc cases**

(30) Priority: 18.04.2000 JP 2000122414
(71) Applicant: SONY CORPORATION, Tokyo 141 (JP)
(72) Inventor: Ishii, Hirohisa, c/o Intellectual Property Dept., Shinagawa-ku, Tokyo 141 (JP); Shiga, Takashi, c/o Intellectual Property Dept., Shinagawa-ku, Tokyo 141 (JP)
(74) Representative: Pilch, Adam John Michael

(57) **Abstract**

A disc housing case has a case body (21) having a case housing section (24) in which a plurality of disc cases (3) are housed as they are stacked in the direction of thickness, and an insertion/ejection aperture (25) for insertion/ejection of the disc cases (3) to/from the case housing section (24). The disc housing case also has an arrangement switching mechanism (22) for switching between a first arrangement state in which the disc cases (3) housed in the case housing section (24) of the case body (21) are arrayed with their respective outer circumferential portions set on a line and a second arrangement state in which the disc cases (3) are arranged to be projected in a step-like manner so that a part of the outer circumferential portions of the major surfaces of the disc cases (3) is exposed outward from the insertion/ejection aperture (25) of the case body (21).

## Description

This invention relates to a disc housing body housing case body for housing a disc case in which a disc-shaped recording medium is housed, a disc cartridge having a disc-shaped recording medium, or a disc case in which a disc cartridge is housed.

Conventionally, optical discs housed in disc cases are mainly distributed. As a conventional disc case in which a CD (compact disc) or CD-ROM (read only memory) is housed as an optical disc, a disc case with a thickness of approximately 10 mm is known.

The conventional disc case has a disc holding member in which an optical disc is set and held, a case body for housing the disc holding member, and a cover body provided to enable opening/closing on the case body.

The disc holding member is made of a resin material and formed in the shape of a substantially rectangular plate. At a substantially central part of the disc holding member, a holding portion for holding the center hole of the optical disc is formed. On the outer circumferential portion of the disc holding member, an engagement pawl to be releasably engaged with the case body is formed.

The case body is made of a resin material and formed in a rectangular shape. The case body has a housing portion for housing the disc holding member. In the housing portion, an engagement recess portion to be engaged with the engagement pawl of the disc holding member is formed and the disc holding member is releasably housed therein.

The cover body is made of a transparent resin material and is formed in a rectangular shape. The cover body is formed with a size large enough to cover the optical disc held by the disc holding member. On the cover body, a hinge portion having a rotation supporting shaft rotatably supported on the case body is formed. The case body has a shaft hole for supporting the rotation supporting shaft of the hinge portion of the cover body and rotatably supports the cover body through the rotation supporting shaft.

On the inner side of the cover body, a first label sheet representing the recording contents of information recorded on the optical disc housed in the disc holding member, and a label housing section for housing a brochure having the first label sheet and the like are formed. In the label housing section, a plurality of holding pawls for holding the first label sheet or the like are integrally formed.

Moreover, a second label sheet having a title label exposed on the back side of the case body for showing the title of the recording contents of information recorded on the optical disc and an index label exposed on the bottom side of the case body for showing the details of the recording contents of the optical disc is provided across the back and bottom sides of on the case body.

In the disc case constituted as described above, the optical disc is held by the disc holding member and the cover boy is closed on the case body, thus housing the optical disc.

In the case of housing multiple conventional disc cases in parallel on a housing shelf or in a substantially box-shaped case housing box for housing a plurality of disc cases, disc case are housed in the state where only the title label of the second label sheet located on the back side of each disc case is exposed outward. As the title labels are visually recognized in the state where the disc cases are housed, the recording contents of the optical discs in the respective disc cases are confirmed and the title labels are used for retrieving necessary optical discs.

Of the conventional disc cases, there is a disc case with a reduced thickness of approximately 7 mm or 5 mm in comparison with the typical thickness of 10 mm. This disc case has a case body having a disc holding section for holding an optical disc, and a cover body provided to enable opening/closing on the case body.

On such a disc case, an unused portion which is not particularly used is integrally provided on the side of a hinge portion for rotatably supporting the cover body, in order to realize unification in the outer dimension with the conventional disc case having a thickness of 10 mm. The unused portion has a recess portion formed along the direction of width of the disc case.

In the case where the conventional disc case with a thickness of 10 mm as described above is used for housing an optical disc which enables writing or additional writing of information such as a CD-R (recordable) or CD-RW (rewritable), since the second label sheet is provided in such a manner that it is inserted between the back and lateral sides of the case body, it is necessary to decompose the disc holding member from the case body and temporarily take out the second label sheet when writing characters on the title label or the index label of the second label sheet. Therefore, with the conventional disc case, the operation is troublesome as it is necessary to temporarily take out the second label sheet showing the recording contents of recorded information and then write additional information thereon.

Moreover, with the conventional disc case, since the operation to house the second label sheet in the case body and the operation to reassemble the disc holding member with the case body are required after the recording contents are written on the second label sheet, the operation to write the recording contents on the second label sheet is extremely troublesome. Therefore, practically, the title label or the like of the second label sheet on the conventional disc case is rarely used.

Since the operation to represent the title is troublesome, users often write characters of the title on the major surface of the optical disc. When a plurality of disc cases are housed as they are stacked in the direction of thickness, the users cannot visually recognize the titles and have poor retrievability of a desired optical disc.

With respect to the above-described disc case with a reduced thickness, it may be considered to provide the title label or the like on the back side of the disc case, which is the lateral side of the unused portion exposed outward when a plurality of disc cases are housed as they are stacked in the direction of thickness. However, since the width of the back side is narrow, the title must be written with relatively small characters. As a result, the operability of writing is poor and it is difficult to visually recognize the written characters. Therefore, providing the title label or the like on the back side of the disc case with a reduced thickness is not practically adopted.

Thus, with respect to the disc case with a reduced thickness, it may also be considered to provide the title label on the major surface of the unused portion. However, since the title label located on the major surface cannot be visually recognized from outside when the disc cases are housed in the above-described case housing box as they are stacked in the direction of thickness, it is necessary to temporarily take out each disc case and confirm the title label. Therefore, the operation to confirm the title label is troublesome and the retrievability of a desired optical disc is low.

With respect to the disc case having the title label provided on its major surface as described above, it may be considered to house the disc cases as they are arranged in a step-like manner so as to expose outward the major surface of the unused portion where the title label is located. However, arranging and projecting the disc cases in a step-like manner requires a large housing space and the case housing box becomes bulky.

Thus, it is an aim of at least an embodiment of the present invention to provide a disc housing body housing case which improves the retrievability of a desired disc-shaped recording medium and enables efficient housing of the disc housing body.

A disc housing body housing case according to the present invention has a case body which has a housing section for housing a plurality of disc housing bodies having disc-shaped recording media housed therein in such a manner that the disc housing bodies are stacked in the direction of thickness and an aperture for inserting and ejecting the disc housing bodies to and from the housing section. The disc housing body housing case also has arrangement switching means for switching a first arrangement state in which the disc housing bodies housed in the housing section of the case body are arrayed with their respective outer circumferential portions set on a line and a second arrangement state in which the disc housing bodies are arranged to be projected in a step-like manner so that a part of outer circumferential portions of major surfaces of the disc housing bodies is exposed outward from the aperture of the case body.

In the disc housing body housing case thus constituted, the arrangement state of the plurality of disc housing bodies housed in the housing section can be switched between the first arrangement state and the second arrangement state by the arrangement switching means. When the arrangement state is switched from the first arrangement state in which the plurality of disc housing bodies are housed in the housing section with their respective outer circumferential portions set on a line, to the second arrangement state, the arrangement switching means arranges the plurality of disc housing bodies in a step-like manner so that a part of the outer circumferential portions of the disc housing bodies is exposed outward.

The invention will now be described by way of example with reference to the accompanying drawings, throughout which like parts are referred to by like references, and in which:
Fig. 1 is a perspective view showing a first arrangement state of a disc housing case according to an embodiment of the present invention;
Fig.2 is a perspective view showing a second arrangement state of the disc housing case;
Fig.3 is a perspective view showing an exemplary disc case housed in the disc housing case;
Fig.4 is an exploded perspective view showing the disc housing case;
Fig.5 is a plan view showing a bottom section of the disc housing case, as viewed from outside;
Fig.6 is a plan view showing an arrangement switching member provided in an arrangement switching mechanism of the disc housing case;
Fig.7 is a longitudinal cross-sectional view for explaining essential portions of the arrangement switching member;
Fig.8 is a plan view showing a base of the arrangement switching mechanism;
Fig.9 is a plan view showing a partition plate, which is spread, of the arrangement switching mechanism;
Fig. 10 is a perspective view for explaining the partition plate; and
Figs.11A to 11F are schematic views for explaining the operation of the arrangement switching mechanism.

A preferred embodiment of a disc housing case according to the present invention will now be described with reference to the drawings.

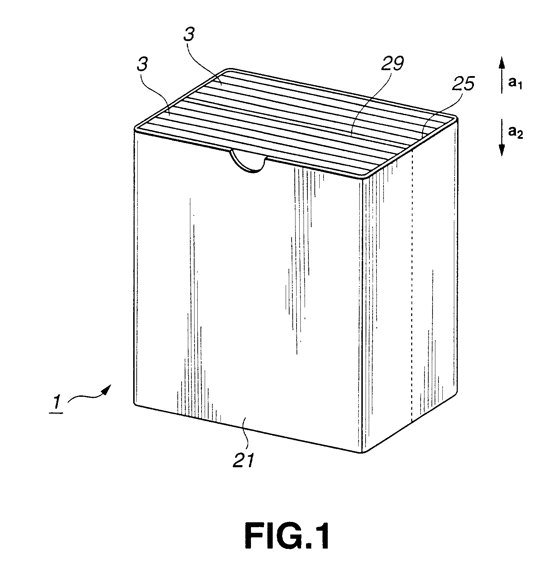

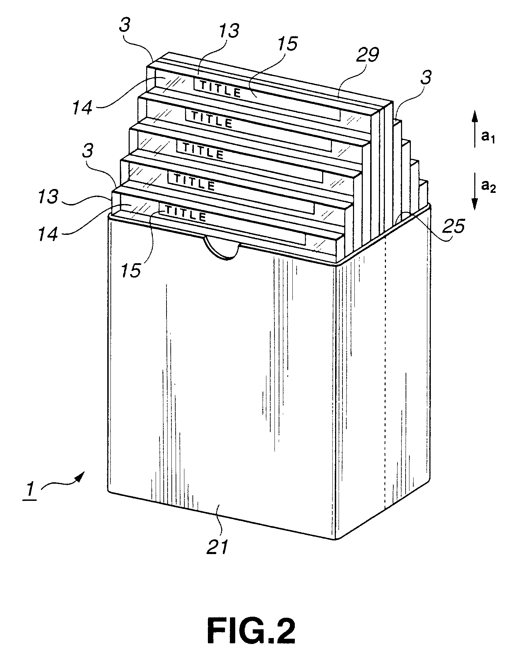

In a disc housing case 1, as shown in Figs. 1 and 2, a plurality of disc cases 3 having optical discs housed therein are housed as they are stacked in the direction of thickness.

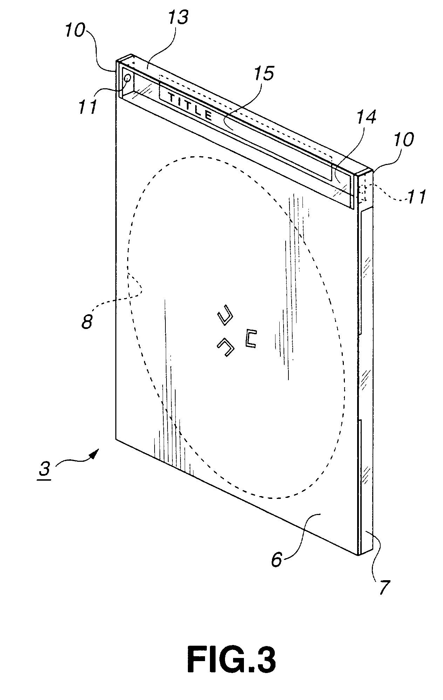

In general, a plurality of types of disc cases with different thicknesses are known as the disc cases 3 of this type. The disc case 3 with a thickness of approximately 5 mm has a case body 6 having a disc housing section 8 for housing an optical disc therein, and a cover body 7 provided to enable opening/closing on the disc housing section 8, as shown in Fig.3.

The case body 6 is formed in a substantially rectangular shape and a pair of supporting pieces 10, 10 for rotatably supporting the cover body 7 are integrally formed to protrude on outer circumferential portions of the case body 6, as shown in Fig.3. On the supporting pieces 10, 10, rotation supporting shafts 11, 11 for rotatably supporting the cover body 7 are integrally formed to protrude. The cover body 7 is formed in the shape of a substantially rectangular flat plate and is rotatably supported by the supporting pieces 10, 10 of the case body via the rotation supporting shafts 11, 11, as shown in Fig.3. In an area on an outer circumferential portion of the cover body 7 between the supporting pieces 10, 10 of the case body 6, an unused portion 13 is integrally formed in order to realize unification in the outer dimension with the typical conventional disc case with a thickness of approximately 10 mm. The unused portion 13 has a substantially rectangular recess portion 14 opened to the major surface of the disc case 3.

Thus, in the disc case 3 housed in the disc housing case according to the present invention, the recess portion 14 of the unused portion 13 is used as a display portion for displaying the recording contents of information recorded on the optical disc housed in the disc housing section 8 and is also used as a holding portion for holding the disc case 3. Inside the recess portion 14 of the unused portion 13 of the disc case 3, a title label 15 showing the title of the recording contents of the optical disc is provided. The title label 15 is formed in a sheet-like shape having, for example, an adhesive layer. After the title is written thereon, the title label 15 is attached inside the recess portion 14. Therefore, by visually recognizing the title label 15 in the recess portion 14 located at one lateral end of the outer circumferential portion of the major surface of the disc case 3, it is possible to confirm the recording contents of the optical disc housed in the disc housing section 8.

Similarly, with respect to a disc case with a thickness of approximately 7 mm, though not shown in the drawings, an unused portion having a recess portion opened to a major surface is integrally formed on an outer circumferential portion of a case body, and a pair of supporting pieces rotatably supported on the case body are integrally formed to protrude on an outer circumferential portion of a cover body. Therefore, in this disc case, too, the unused portion can be used as a display portion and as a holding portion.

The disc housing case 1 according to the present invention will be described as a case in which the above-described general disc case 3 is housed. However, the disc housing case 1 may also be used for housing other disc housing bodies such as a disc tray having a disc housing section, a disc cartridge in which an optical disc is rotatably housed, and a disc case in which a disc cartridge is housed. The disc housing case 1 is applied to an optical disc like a CD-R (recordable) which enables additional writing of information, a CD-RW (rewritable) which enables rewriting of information, or a CD-ROM (read only memory), as a disc-shaped recording medium. However, it is a matter of course that the disc housing case 1 may be applied to other disc-shaped recording media such as a magneto-optical disc and a magnetic disk.

The disc housing case 1 in which the above-described disc case 3 is housed will now be described. The disc housing case 1 according to the present invention has a case body 21 in which a plurality of disc cases 3 are housed, and an arrangement switching mechanism 22 for switching the arrangement of the plurality of disc cases 3 housed in the case body 21 by moving the disc cases 3 in the directions of arrows a1 and a2, as shown in Figs.1 and 2.

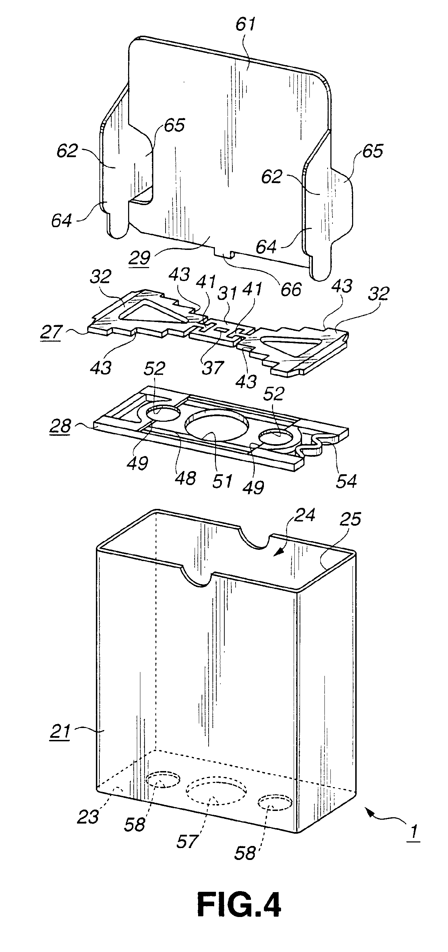

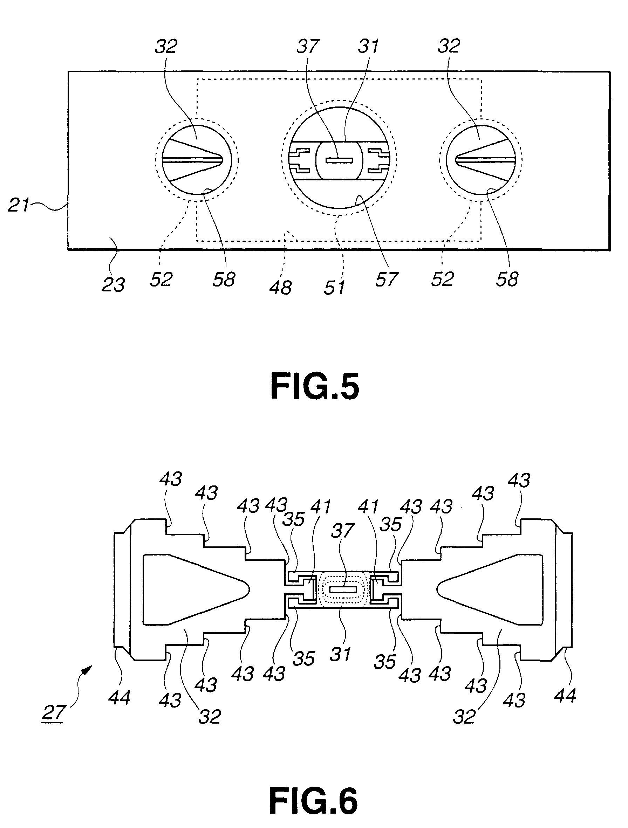

The case body 21 is formed in the shape of a box having a substantially rectangular bottom portion 23, for example, using a cardboard, and is assembled by folding a cardboard sheet cut into a predetermined shape, as shown in Figs.4 and 5.

The case body 21 has a case housing section 24 in which a plurality of disc cases 3 are housed, and an aperture 25 for inserting and ejecting the disc cases 3 to and from the case housing section 24, as shown in Fig.4.

The arrangement switching mechanism 22 switches the arrangement state between a first arrangement state in which the plurality of disc cases 3 housed in the case housing section 24 are arranged so that their respective outer circumferential portions are arrayed on a line, as shown in Fig.1, and a second arrangement state in which the plurality of disc cases 3 housed in the case housing section 24 are arranged so that the recess portions 14 on the outer circumferential portions of the disc cases 3 are projected from the aperture 25 for insertion/ejection, as shown in Fig.2.

The arrangement switching mechanism 22 has an arrangement switching member 27 which can be deformed to a first form and a second form so as to switching the arrangement of the plurality of disc cases 3 housed in the case housing section 24 between the first arrangement state and the second arrangement state, a base 28 for holding the arrangement switching member 27 which has switched the arrangement of the plurality of disc cases 3 to the second arrangement state, and a partition plate 29 for bisecting the housing area of the case housing section 24 in the direction of thickness of the case body 21, as shown in Fig.4.

The arrangement switching member 27 is made of an elastic resin material such as polypropylene and has a supporting portion 31 for supporting the disc case 3 located on the uppermost stage in the second arrangement state and a pair of leg portions 32, 32 provided on the supporting portion 31 to enable bending and adapted for moving the supporting portion 31 in the direction of the arrow a1, that is, away from the bottom portion 23 of the case body 21, as shown in Fig.4.

When in the first form, the arrangement switching member 27 presents a substantially flat plate-like shape in which the supporting portion 31 and the pair of leg portions 32, 32 are parallel to each other, and is provided along the major surface of the base 28.

The supporting portion 31 is formed to correspond substantially to the center of the bottom portion 23 of the case body 21, as shown in Fig.6. On the supporting portion 31, supporting pieces 35, 35, 35, 35 for supporting the outer circumferential portion of the disc case 3 located on the uppermost stage in the second arrangement state are integrally formed parallel to the major surface of the supporting portion 31. The supporting pieces 35, 35, 35, 35 are formed at positions shifted from the center of the supporting portion 31 by a predetermined quantity of displacement in the direction of width of the case body 21, and support the positions shifted from the center of one lateral side of the disc case 3 in the direction of width. With the supporting pieces 35, 35, 35, 35, it is possible to handle a disc housing body like a disc tray (not shown) in which a cut-out portion for taking out an optical disc from a disc housing section is formed at the center of one lateral side, in addition to the above-described disc case 3, and it is possible to securely support the position avoiding the cut-out portion. The arrangement switching member 27 may be constituted so as to support the center of one lateral side of the disc case 3 by the supporting portion 31.

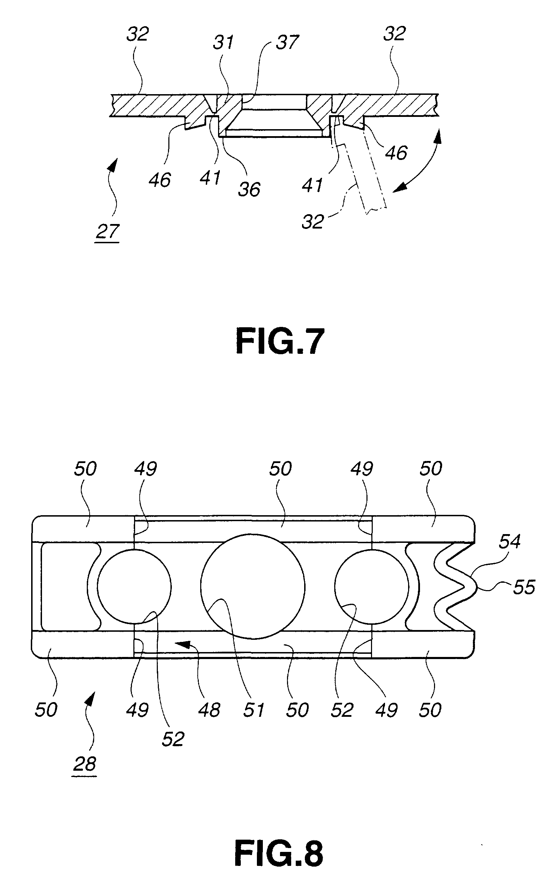

On a side of the supporting portion 31 facing the bottom portion 23 of the case body 21, an operating portion 36 for moving in the direction of the arrow a1 is integrally formed to protrude, as shown in Fig.7. At the center of the supporting portion 31, an attachment groove 37 in formed by which the partition plate 29 is engaged and attached.

The leg portions 32, 32 are provided at the opposite positions on both sides of the supporting portion 31, and their respective one ends are integrally connected to the supporting portion 31 via hinge portions 41 which can be elastically deformed, as shown in Fig.6. Each of the leg portions 32, 32 is formed in the shape of an isosceles triangle with its width increasing toward the distal end, and a plurality of supporting surfaces 43 for supporting the disc cases 3 as the outer circumferential portions of the disc cases 3 are set thereon are cut out in a step-like manner along the outer circumferential portion of each of the equal sides of the triangle, as shown in Fig.6. The supporting surfaces 43 are formed with a predetermined step from one another so as to expose the recess portions 14 of the disc cases 3 outward in a step-like manner, as shown in Fig.2.

On the base of the triangle at distal end of the leg portion 32, an engagement pawl 44 sliding on the base 28 and engaged with the base 28 is integrally formed, as shown in Fig.6. Also, on the leg portion 32, an abutment portion 46 for preventing the leg portion 32 from being folded at a predetermined angle or more to the supporting portion 31 when the leg portion 32 is folded to the supporting portion 31 is integrally formed to protrude at a position adjacent to the hinge portion 41, as shown in Fig.7. When the leg portion 32 is folded at a predetermined angle to the supporting portion 31, the abutment portion 46 is abutted against the outer circumferential portion of the supporting portion 31, as shown in Fig.7. Thus, excessive folding of the leg portion 32 to the supporting portion 31 and failure to restore the first form are securely prevented.

The base 28 is made of a resin material such as an ABS (acrylonitrile-butadienestyrene) resin and is formed in a substantially rectangular flat plate-like shape, as shown in Fig.8. The base 28 has an outer dimension slightly smaller than that of the bottom portion 23 of the case body 21 and is provided on the bottom portion 23 of the case body 21.

On the major surface of the base 28, substantially rectangular recess portions 48 in which the leg portions 32, 32 of the arrangement switching member 27 deformed into the second form enter are provided substantially at the center in the direction of the long sides, as shown in Fig.8. Also, on the major surface of the base 28, band-shaped sliding portions 50, 50 on which the distal ends of the leg portions 32, 32 of the arrangement switching member 27 slide are formed at both ends in the direction of the short sides, across the long sides over the inner and outer sides of the recess portions 48, as shown in Fig.8. At both ends in the direction of the long sides inside the recess portions 48, engagement walls 49, 49, 49, 49 to be engaged with both ends in the direction of width of the distal end portions of the leg portions 32, 32 of the arrangement switching member 27 are formed on the sliding portions 50, 50.

Also, at the center on the major surface of the base 28, a circular moving operation aperture 51 for moving the supporting portion 31 of the arrangement switching member 27 in the direction of the arrow a1 is provided to penetrate the base 28, as shown in Fig.8. Moreover, on the major surface of the base 28, circular canceling operation apertures 52, 52 for canceling the engagement between the engagement pawls 44 of the leg portions 32, 32 and the engagement walls 49 of the base 28 by moving the leg portions 32, 32 of the arrangement switching member 27 in the direction of the arrow a1 are provided to penetrate the base 28 at the positions exposed to the engagement walls 49.

On an outer circumferential portion of the base 28 at one end in the direction of the long side exposed to an inner wall of one lateral side in the direction of width of the case body 21, an elastic displacement portion 54 having an engagement protrusion 55 to be engaged with the inner wall of the case body 21 is integrally formed, as shown in Fig.8. The engagement protrusion 55 of the elastic displacement portion 54 is elastically displaceable in the direction of width of the case body 21. The engagement protrusion 55 is elastically displaced in accordance with the unevenness of the width of the case housing section 24 and is thus securely engaged with the inner wall of the case body 21. As the engagement protrusion 55 is engaged with the inner wall of the case housing section 24, the base 28 is fixed to the position adjacent to the bottom portion 23 of the case body 21.

On the bottom portion 23 of the case body 21, a circular moving operation aperture 57 and circular canceling operation apertures 58,58 which are slightly smaller in diameter than the apertures 51 and 52 are provided to penetrate the bottom portion 23 at the positions corresponding to the moving operation aperture 51 and the canceling operation apertures 52, 52 of the base 28, as shown in Fig.5. Therefore, with the moving operation aperture 57 and the canceling operation apertures 58, 58 of the bottom portion 23, it is possible to push, with a fingertip or the like, the supporting portion 31 and the leg portions 32, 32 of the arrangement switching member 27 into the direction of the arrow a1 from outside of the bottom portion 23 of the case body 21 via the moving operation aperture 51 and the canceling operation apertures 52, 52 of the base 28.

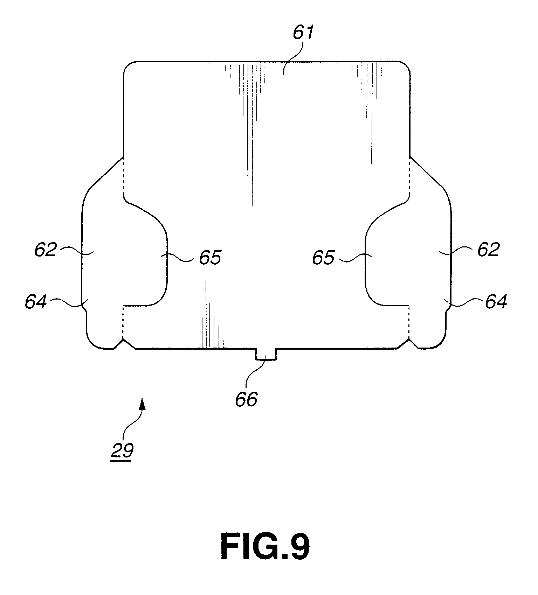

The partition plate 29 is made of, for example, a cardboard cut in a predetermined shape, and has a major surface portion 61 for bisecting the housing area of the case housing section 24 in the direction of thickness of the case body 21, and a pair of guide surface portions 62, 62 slidable in the directions of the arrows a1 and a2 in the case housing section 24 along both lateral sides in the direction of width of the case housing section 24, as shown in Figs.4 and 9.

The major surface portion 61 is formed with a width slightly smaller than the width of the case housing section 24.

Each of the guide surface portions 62, 62 has a folded piece 64 folded in the direction perpendicular to the major surface portion 61, and a rise tab 65 formed by cutting out and raising a part of the major surface portion 61 in the direction perpendicular to the major surface portion 61, as shown in Figs.4, 9 and 10.

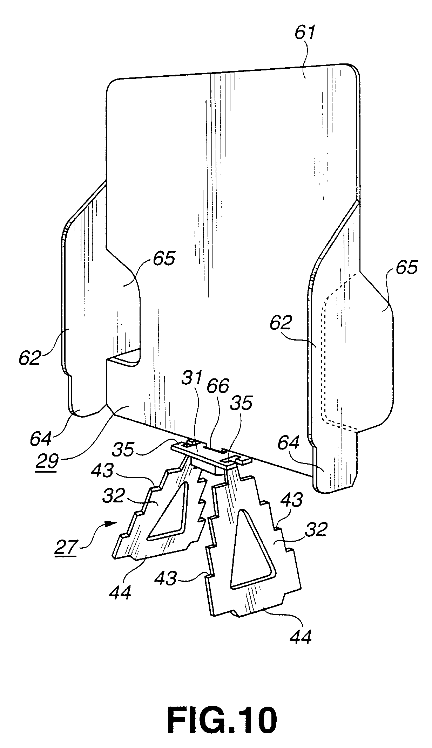

On the partition plate 29, an attachment piece 66 to be attached to the supporting portion 31 of the arrangement switching member 27 is integrally provided to protrude at the center of one lateral end exposed to the bottom portion 23 of the case body 21, as shown in Figs.4, 9 and 10. The partition plate 29 is fixed to the supporting portion 31 by inserting the attachment piece 66 into the attachment groove 37 of the supporting portion 31 and then filling and solidifying an adhesive, as shown in Fig.10.

By molding a resin material into the partition plate, a pair of guide portions may be integrally formed on the major surface portion of the partition plate, and the partition plate may be formed integrally with the supportingportion of the arrangement switching member. The partition plate may also be formed in a shape having only the major surface portion and eliminating the guide surface portions, and both lateral ends of the major surface portion may be supported movably in the guide groove provided in the case body.

The operation of switching the arrangement of the plurality of disc cases 3 housed in the case body 21 between the first arrangement state and the second arrangement state by the arrangement switching mechanism 22 in the disc housing case 1 constituted as described above will now be described with reference to the drawings.

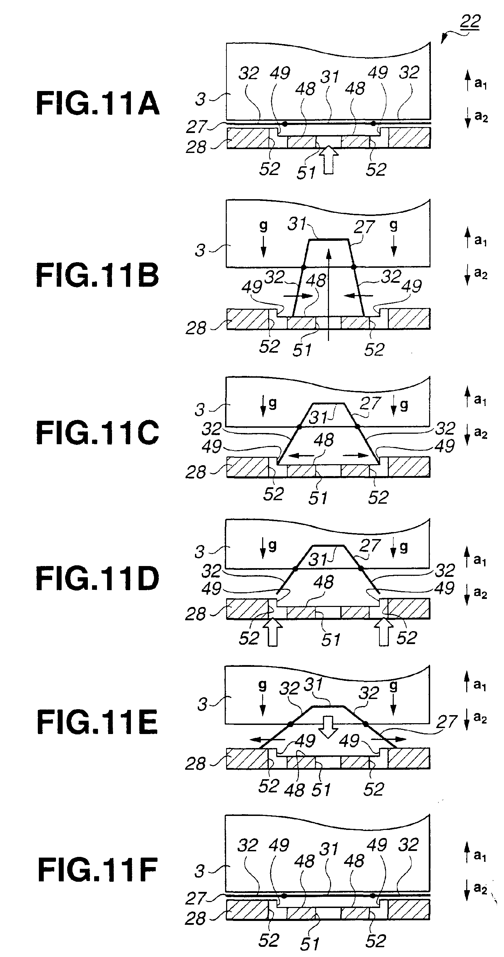

First, when the disc housing case 1 is in the first arrangement state in which the plurality of disc cases 3 stacked in the direction of thickness and thus housed in the case housing section 24 are arranged with their respective outer circumferential portions set on a line, as shown in Figs. 1 and 11A, the arrangement switching member 27 is located along the major surface of the base 28 provided on the bottom portion 23 of the case body 21 and the arrangement switching member 27 is thus set in the first form presenting a substantially flat plate-like shape in which the supporting pieces 35, 35, 35, 35 of the supporting portion 31 are parallel to the major surfaces of the leg portions 32, 32. Each of the disc cases 3 housed in the case housing section 24 is housed in such a direction that its recess portion 14 is located on the side of the insertion/ejection aperture 25.

In the case where the arrangement state is switched from the first arrangement state to the second arrangement state, as shown in Figs.11A and 11B, in the arrangement switching mechanism 22, a fingertip or the like is inserted into the moving operation aperture 57 from outside of the bottom portion 23 of the case body 21 so as to enter the moving operation aperture 51 of the base 28, thus pushing the supporting portion 31 of the arrangement switching member 27 into the direction of the arrow a1. As the supporting portion 31 of the arrangement switching member 27 is moved in the direction of the arrow a1 against the weight of each disc case 3 applied in the direction of an arrow g as shown in Fig.11B, the leg portions 32, 32 are folded to the supporting portion 31 via the hinge portions 41 and are moved in such a direction that the distal ends of the leg portions 32, 32 approach each other. In the arrangement switching member 27, the leg portions 32, 32 folded to the supporting portion 31 slide on the sliding portions 50, 50 of the base 28, then pass the positions where the engagement walls 49, 49, 49, 49 are provided, and enter inside the recess portion 48.

In the arrangement switching member 27, as the supporting portion 31 moves in the direction of the arrow a1 while the leg portions 32, 32 are folded to the supporting portion 31, the disc cases 3 housed in the case housing section 24 are supported and moved in a step-like manner in the direction of the arrow a1 by the supporting pieces 35, 35, 35, 35 of the supporting portion 31 and the supporting surfaces 43 of the leg portions 32, 32. As the supporting portion 31 moves in the direction of the arrow a1, the guide surface portions 62,62 of the partition plate 29 are slid on the inner wall of the case housing section 24, and the partition plate 29 moves in the direction of the arrow a1.

Then, as the moving operation of the arrangement switching member 27 by a fingertip or the like is stopped, as shown in Fig.11C, the supporting portion 31 of the arrangement switching member 27 is moved in the direction of the arrow a2 by the weight of each disc case 3, and the distal ends of the leg portions 32, 32 are slid on the sliding portions 50, 50 within the recess portion 48 and are moved away from each other. In the arrangement switching member 27, as the engagement pawls 44 of the leg portions 32, 32 are engaged with the engagement walls 49 of the recess portion 48 of the base 28, the supporting portion 31 moving in the direction of the arrow a2 is stopped at a predetermined position and the arrangement switching member 27 is deformed to the second form. Since the arrangement switching member 27 is held in the second form by the engagement of the engagement pawls 44 of the leg portions 32, 32 with the engagement walls 49 of the recess portion 48, the arrangement of the disc cases 3 is switched to the second arrangement state in the disc cases 3 are arranged in a step-like manner with their respective recess portions exposed outward from the insertion/ejection aperture 25 of the case body 21, as shown in Fig.2, and the second arrangement state is held.

With the arrangement switching mechanism 22, when in the second arrangement state, the plurality of disc cases 3 housed in the case housing section 24 are arranged in a step-like manner in each housing area bisected by the partition plate 29 with the title labels 15 of the recess portions 14 of the disc cases 3 exposed outward, thus presenting the shape of a ridge as a whole, as shown in Fig.2.

Therefore, with the arrangement switching mechanism 22, it is possible to easily take out a desired disc case 3 from the disc housing section 24 by visually recognizing the title label 15 of the recess portion 14 of each disc case 3, then quickly selecting the desired disc case 3 from the plurality of disc cases 3 housed in the disc housing section 24 and putting a fingertip in the recess portion 14 to hold the selected disc case 3.

In the case where the arrangement state is switched from the second arrangement state to the first arrangement state, as shown in Fig.11D, in the arrangement switching mechanism 22, fingertips are inserted into the canceling operation apertures 58, 58 and the canceling operation apertures 52, 52 of the base 28 from outside of the bottom portion 23 of the case 21, and the leg portions 32, 32 of the arrangement switching member 27 are pushed into the direction of the arrow a1 by the fingertips.

As shown in Fig.11E, when the leg portions 32, 32 of the arrangement switching member 27 are moved in the direction of the arrow a1, the engagement between the engagement walls 49 of the recess portion 48 of the base 28 and the engagement pawls 44 of the leg portions 32, 32 is canceled and the distal ends of the leg portions 32, 32 are moved away from each other by the weight of each disc case 3. As the distal ends of the leg portions 32, 32 are moved away from each other, the engagement pawls 44 of the leg portions 32, 32 are moved to outside of the recess portion 48 of the base 28 and the engagement switching member 27 is slid along the major surface of the base 28.

Then, as shown in Fig. 11F, the arrangement switching member 27 is deformed by the weight of each disc case 3 to the first form in which the supporting portion 31 is moved further in the direction of the arrow a2 while the major surfaces of the leg portions 32, 32 are made parallel to the major surface of the base 28. Thus, the disc cases 3 are restored to the first arrangement state.

With respect to the arrangement switching mechanism 22, in the case of switching the arrangement state from the second arrangement state to the first arrangement state, the case body 21 in which the disc cases 3 are housed in the second arrangement state is temporarily inclined in such a direction that the insertion/ejection aperture 25 faces downward, and the disc cases 3 are caused to protrude further from the insertion/ejection aperture 25, thus deforming the arrangement switching member 27 to the first form. Therefore, the first arrangement state can be easily restored without pushing the leg portions 32, 32 of the arrangement switching member 27.

The above-described arrangement switching mechanism 22 is constituted so that the disc case 3 located on the lowermost stage in the second arrangement state is supported by the supporting surfaces 43 on the lower stage side of the leg portions 32, 32 of the arrangement switching member 27 and is thus moved in the direction of the arrow a1. However, the case housing section 24 may be formed with a reduced depth in accordance with the height of projection of the recess portion 14 of the disc case 3 so as to expose the recess portion 14 of the disc case 3 outward, without moving only the disc case 3 located on the lowermost stage. With such an arrangement switching mechanism, the other disc cases 3 except for the disc case 3 located on the lowermost stage in the second arrangement state are supported by the supporting surfaces 43 of the leg portions 32, 32 of the arrangement switching member 27.

As described above, since the disc housing case 1 has the arrangement switching mechanism 22, the arrangement state can be switched, when necessary, between the first arrangement state in which the plurality of disc cases 3 are housed compactly and the second arrangement state in which the title labels 15 of the recess portions 14 can be visually recognized. Therefore, it is possible to quickly select ab arbitrary disc case 3 from the plurality of disc cases 3 housed in the case body 21 and easily take out the desired disc case 3. With this disc housing case 1, the plurality of disc cases 3 can be efficiently housed by switching the arrangement state to the first arrangement state.

Moreover, since the disc housing case 1 has the case body 21 made of paper, it is possible to manufacture the disc housing case 1 at a manufacturing cost equal to or lower than the manufacturing cost of the conventional case housing box, and therefore the disc housing case 1 can be provided inexpensively. With the disc housing case 1, as the arrangement switching mechanism 22 switches the arrangement of the disc cases 3 between the first arrangement state and the second arrangement state, it is possible to use typical disc housing bodies such as the above-described disc cases 3. Therefore, the manufacturing cost can be reduced. Also, with the disc housing case 1, it is possible to further reduce the manufacturing cost by using paper to produce the case body 21 and the partition plate 29 of the arrangement switching mechanism 22.

With the disc housing case 1, since the case housing section 24 is divided into housing areas by the partition plate 29, it is possible to prevent erroneous housing into an adjacent housing area which is not a predetermined housing position, when housing the disc cases 3 taken out from the case housing section 24 back into the case housing section 24.

Although not shown, a cover body for opening/closing the insertion/ejection aperture 25 of the case body 21 may be provided on the disc housing case 1. Such a cover body may be integrally formed on the case body 21 or may be releasably provided on the case body 21. In the case where the cover body is integrally formed on the case body 21 made of paper, the cover body may be cut in a broken line along the hinge portion which enables folding to the case body 21, so that the cover body can be easily folded and can be removed, when necessary.

As described above, with the disc housing body housing case according to the present invention, it is possible to quickly select and easily take out a desired disc-shaped recording medium from a plurality of disc-shaped recording media housed in the housing section. Thus, the retrievability can be improved.

Also, with the disc housing body housing case, a plurality of disc housing bodies can be efficiently housed. Moreover, the disc housing body housing case enables reduction in the manufacturing cost and therefore can be provided inexpensively.

## Claims

1. A disc housing body housing case comprising:
a case body having a housing section for housing a plurality of disc housing bodies having disc-shaped recording media housed therein in such a manner that the disc housing bodies are stacked in the direction of thickness, and an aperture for inserting and ejecting the disc housing bodies to and from the housing section; and
arrangement switching means for switching a first arrangement state in which the disc housing bodies housed in the housing section of the case body are arrayed with their respective outer circumferential portions set on a line and a second arrangement state in which the disc housing bodies are arranged to be projected in a step-like manner so that a part of outer circumferential portions of major surfaces of the disc housing bodies is exposed outward from the aperture of the case body.

2. The disc housing body housing case as claimed in claim 1, wherein a display portion showing the recording contents of information recorded on the disc-shaped recording medium is provided on one lateral end of an outer circumferential portion of the major surface of each of the disc housing bodies housed in the housing section of the case body, and
when in the second arrangement state, the arrangement switching means arranges the plurality of disc housing bodies in a step-like manner so that the display portions of the plurality of disc housing bodies are exposed outward.

3. The disc housing body housing case as claimed in claim 1, wherein the arrangement switching means has an arrangement switching member having a supporting portion for supporting the disc housing body located on the uppermost stage in the second arrangement state and leg portions provided to be enable folding to the supporting portion and adapted for moving the supporting portion in a direction perpendicular to a bottom portion of the case body and for supporting the disc housing bodies in a step-like manner, and the arrangement switching means being deformable between a first form substantially parallel to the bottom portion of the case body in the first arrangement state and a second form in which the leg portions are folded to the supporting portion in the second arrangement state, and
holding means for holding the arrangement switching member in the second form.

4. The disc housing body housing case as claimed in claim 3, wherein a plurality of supporting surfaces for arranging the plurality of disc housing bodies in a step-like manner and thus supporting the disc housing bodies are provided on the leg portions of the arrangement switching member.

5. The disc housing body housing case as claimed in claim 3, wherein the arrangement switching means has switching operation means for switching the form of the arrangement switching member between the first form and the second form.

6. The disc housing body housing case as claimed in claim 3, wherein the holding means is provided on the bottom portion of the case body and has a base on which engagement portions to be engaged with both ends of the leg portions when the arrangement switching member is set in the second form.

7. The disc housing body housing case as claimed in claim 6, wherein operation apertures for moving the arrangement switching member from outside of the bottom portion of the case body are provided in the bottom portion of the case body and in the base.

8. The disc housing body housing case as claimed in claim 6, wherein cancellation apertures for canceling the engagement state between the engagement portions of the base and the leg portions of the arrangement switching member from outside of the bottom portion of the case body are provided in the bottom portion of the case body and in the base.

9. The disc housing body housing case as claimed in claim 1, wherein the arrangement switching means has a partition plate which divides the housing area of the housing section in the direction of thickness of the disc housing bodies and is provided to be movable in the direction parallel to the major surfaces of the disc housing bodies housed in the housing section, and
the arrangement switching means has the plurality of disc housing bodies arranged in a step-like manner in each housing area divided by the partition plate.

10. The disc housing body housing case as claimed in claim 9, wherein the partition plate is moved integrally with the supporting portion of the arrangement switching member.

11. The disc housing body housing case as claimed in claim 1, wherein a cover body which enables opening and closing of the aperture is provided on the case body.

12. The disc housing body housing case as claimed in claim 1, wherein the case body is made of paper.
